# EUROPEAN PATENT APPLICATION

(11) **EP 0 977 178 A2**
(43) Date of publication of application: **02.02.2000**
(21) Application number: 99306012.8
(22) Date of filing: 29.07.1999
(51) Int. Cl.: G11B 5/10, G11B 5/187, G11B 7/08, G11B 7/12, G11B 15/62, G11B 15/64

(54) **Head and recording/reproducing head device**

(30) Priority: 31.07.1998 JP 21836298
(71) Applicant: SONY CORPORATION, Tokyo 141 (JP)
(72) Inventor: Takayama, Jun, c/o Sony Corporation, Tokyo (JP)
(74) Representative: Robinson, Nigel Alexander Julian

(57) **Abstract**

A head (1) of the present invention records/reproduces the information for a tape-shaped recording medium (2). The head has a substantially planar facing surface (4) to the recording medium and an angle (θ₁) less than 90° between the facing surface and the lateral surface (5) onto which the recording medium is introduced, so that a multi-channel head and a recording/reproducing head device are provided which can maintain optimum contact with the recording medium and a stable operation even if the recording medium entrance side edge of the head is worn out.

## Description

This invention relates to a head and a recording/reproducing head device for recording and/or reproducing the infonnation for a tape-shaped recording medium.

In keeping up with the recent tendency towards high-density recording, the track width of the track for infonnation recording is decreasing. Thus, researches and development of a head adapted to cope with the decreased track width are underway.

In the field of magnetic recording, for example, it has recently been proposed to use the magnetic head technology of recording/reproducing a magnetic disc, used for hard disc devices, for example, for recording/reproducing a magnetic tape. In general, a magnetic disc is narrower in track width than a magnetic tape, such that a magnetic head for a disc adapted to cope with a narrow track is particularly suited for recording/reproducing a magnetic tape of high recording density.

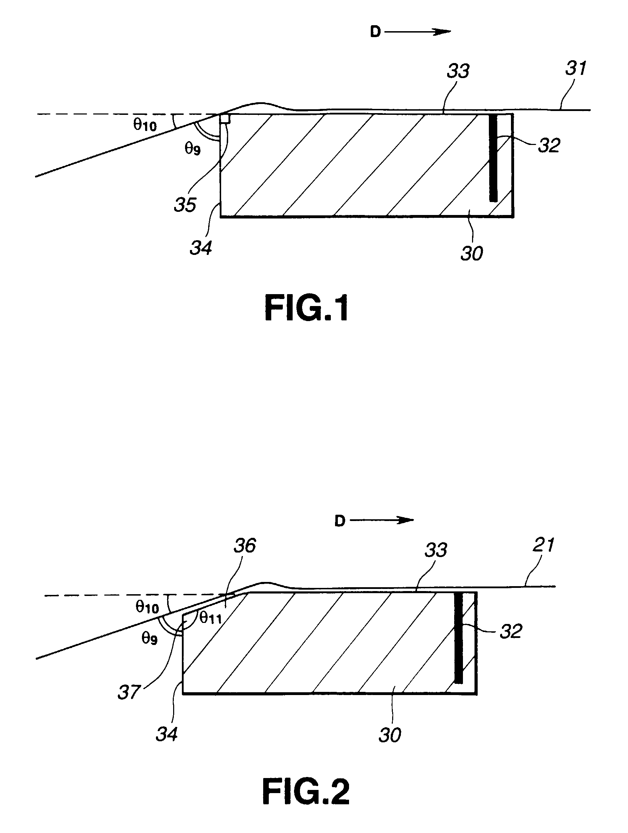

Fig.1 is a schematic cross-sectional view showing how the infonnation is recorded or reproduced on or from a magnetic tape 31 using a magnetic head 30 which has applied the magnetic head technology for the disc. In general, the magnetic head 30 has plural magnetic head elements 32 along the tape width. The magnetic head 30 has a substantially rectangular cross-section along the direction of sliding contact with the magnetic tape 31 and a substantially planar sliding surface 33 with respect to the magnetic tape 31.

This magnetic head 30 records/reproduces the information for the magnetic tape 31 running in the direction indicated by arrow D in Fig.1. Ifnow the magnetic tape 31 runs at an elevated speed, there is generated a thin air layer (air film) which is run by being entrained by the running magnetic tape 31. If this air film is intruded into the space between the sliding surface 33 of the magnetic head 30 and the magnetic tape 31, the contact pressure between the magnetic head 30 and the magnetic tape 31 is lowered.

For preventing the contact pressure between the magnetic head 30 and the magnetic tape 31 from being lowered due to the air film, the magnetic tape 31 is introduced so that a pre-set angle (wrap angle) will be included between the magnetic tape and the plane including the sliding surface 33 of the magnetic tape 30. By introducing the magnetic tape 31 so that the magnetic tape 31 will be intruded into the magnetic head 30 with a pre-set wrap angle, the air film, entrained by the running magnetic tape 31, is scraped off by an edge 35 formed at an intersecting portion between a lateral surface 34 on the tape entrance side of the magnetic tape 30 and the sliding surface 33. By scraping offthe air film by the edge 35, the air film is prevented from being introduced into a space between the sliding surface 33 of the magnetic head 30 and the magnetic tape 31 to maintain an optimum abutting contact between the magnetic head 30 and the magnetic tape 31. Since the sliding surface 33 of the magnetic head 30 is substantially planar, the magnetic tape 31 is pulled towards the sliding surface 33 to maintain an optimum abutting contact between the magnetic head 30 and the magnetic tape 31, as will be explained subsequently.

This edge 35 has not only the function of scraping off the air film, but also the function of removing foreign matter, such as dust and dirt attached to the magnetic tape 31. By the edge 35 removing the dust and dirt attached to the magnetic tape 31, recording/reproduction can be executed in stability, without the magnetic head 30 becoming clogged with such foreign matter.

However, this edge 35 undergoes significant abrasion since it is subjected to a locally increased contact pressure by the sliding contact with the magnetic tape 31. If the edge 35 is worn out due to sliding contact with the magnetic tape 31, as shown in Fig.2, it becomes impossible to scrape off the air film or to remove the foreign matter attached to the magnetic tape 31.

If the edge 35 is worn out due to sliding contact with the magnetic tape 31, such that it becomes impossible to scrape off the air film or to remove the foreign matter attached to the magnetic tape 31, not only is the contact pressure between the magnetic tape 31 and the magnetic head 30 lowered, but the magnetic head 30 is clogged with the foreign matter to render the stable operation impossible.

It is therefore an object of the present invention to assist in providing a head and a recording/reproducing head device in which contact thereof with the recording medium and a stable operation can be maintained even if the edge of the head on the medium introducing side is worn out.

Various aspects of the invention are set out in the accompanying claims.

The head of at least preferred embodiments of the present invention is a head which records/reproduces the information for a tape-shaped recording medium. The head has substantially planar facing surface to the recording medium and an angle less than 90° between the facing surface and the lateral surface onto which the recording medium is introduced.

With the head of at least preferred embodiments of the present invention, in which the angle between the facing surface and the lateral surface is less than 90°, if the edge defined between the facing surface and the lateral surface is worn out by the sliding contact thereof with the recording medium, an air film entrained by the running recording medium is scraped off to maintain optimum contact with the recording medium. Also, with the present head, if the edge defined between the facing surface and the lateral surface is worn out due to sliding contact with the recording medium, it is possible to remove any foreign matter attached to the recording medium to assure a stable recording/reproducing operation.

The recording/reproducing head device of at least preferred embodiments of the present invention is a head device having a head for recording/reproducing the information for a tape-shaped recording medium. The head has a substantially planar facing surface to the recording medium and an angle less than 90° between the facing surface and the lateral surface onto which the recording medium is introduced.

With the recording/reproducing head device of at least preferred embodiments of the present invention, in which the angle between the facing surface and the lateral surface is less than 90°, if the edge defined between the facing surface and the lateral surface is worn out by the sliding contact with the recording medium, an air film entrained by the running recording medium is scraped offto maintain optimum contact with the recording medium. With the present recording/reproducing head device, ifthe edge defined between the facing surface and the lateral surface is worn out due to sliding contact thereof with the recording medium, it is possible to remove any foreign matter attached to the recording medium to assure a stable recording/reproducing operation.

Thus, with the head of at least preferred embodiments of the present invention, since the angle of the edge on the medium entrance side is less than 90°, optimum pressure contact of the edge with the recording medium is maintained, if the edge is worn out due to sliding contact thereof with the recording medium, thus assuring a stable recording/reproducing operation.

Also, with the recording/reproducing head device of at least preferred embodiments of the present invention, since the angle defined between a medium entrance side lateral surface of the head and the recording medium being introduced is set so as to be larger than 90°, optimum pressure contact of the edge with the recording medium is maintained, if the edge is worn out due to sliding contact thereof with the recording medium, thus assuring a stable recording/reproducing operation.

Thus, the present invention provides a head and a recording/reproducing head device that are able to record/reproduce plural tracks of a high density tape-shaped recording medium simultaneously in an improved manner.

Embodiments of the invention will now be described, by way of example only, with reference to the accompanying drawings in which:
Fig.1 is a schematic perspective view showing essential portions of an example embodiment of a recording/reproducing head;
Fig.2 is a schematic cross-sectional view showing the state in which the magnetic head ofthe recording/reproducing head device shown in Fig. 1 has been worn out due to sliding contact with the magnetic tape ;
Fig. 3 is a schematic perspective view showing portions of a recording/reproducing head device according to an example embodiment of the present invention;
Fig.4 is a schematic cross-sectional view showing showing essential portions of an example embodiment of a recording/reproducing head device according to the present invention;
Fig.5 is a schematic cross-sectional view showing the state in which the magnetic head ofthe recording/reproducing head device shown in Fig.3 has been worn out due to sliding contact with the magnetic tape ;
Fig.6 illustrates the method for producing a magnetic head and particularly shows, in a plan view, the state in which a large number of magnetic head elements have been formed on a substrate;
Fig.7 illustrates the method for producing a magnetic head and particularly illustrates the state in which a substrate is sliced along plural magnetic head elements to provide raw bars ;
Fig.8 is a cross-sectional view taken along line x3 to x4 in Fig.6;
Fig.9 is a schematic cross-sectional view showing showing essential portions of another example embodiment of a recording/reproducing head device according to the present invention; and
Fig.10 is a schematic cross-sectional view showing essential portions of still another example embodiment of a recording/reproducing head device according to the present invention.

Referring to the drawings, preferred embodiments of the present invention will be explained in detail.

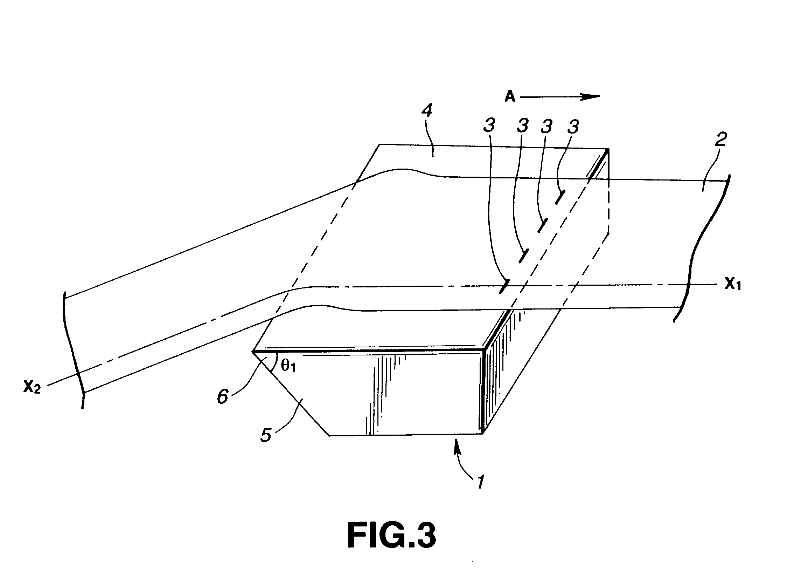

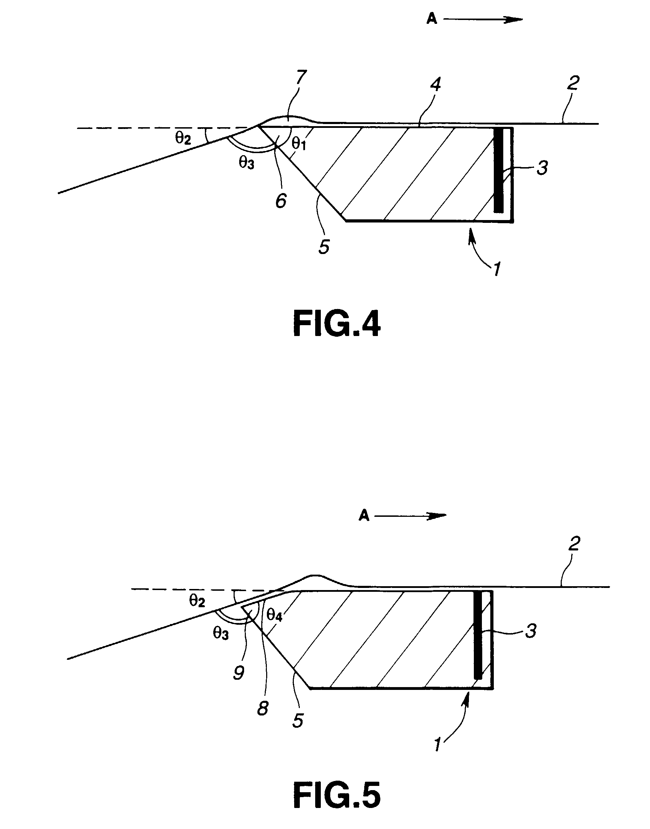

Figs.3 and 4 are schematic views showing portions of an embodiment of a recording/reproducing head device embodying the present invention. The recording/reproducing head device is a magnetic recording/reproducing head device having the magnetic head 1. Figs.3 and 4 are a schematic perspective view showing an illustrative structure ofthe magnetic head 1 loaded on the recording/reproducing head device, and a cross-sectional view taken along line x1 to x2 of Fig.3, respectively.

The magnetic head 1 records/reproduces the infonnation as it is kept in sliding contact with a magnetic tape 2 running along an arrow A in Figs.3 and 4, and includes plural magnetic head elements 3 arrayed along the width ofthe magnetic tape 2. These magnetic head elements 3 may be those magnetic head elements used in conventional magnetic heads adapted to record/reproduce the infonnation for a magnetic recording medium. Since the magnetic head 1 has plural magnetic head elements 3, it can record/reproduce the information for the magnetic tape 2 in parallel.

The magnetic head 1 also has a substantially planar sliding surface 4 for the magnetic tape 2. Also, the magnetic head 1 has an edge 6 formed at a portion of intersection between a tape introducing side lateral surface 5 and the sliding surface 4. With the magnetic head 1, an angle θ₁ between the tape introducing side lateral surface 5 and the sliding surface 4 is set so as to be less than 4°. This angle θ₁ is referred to below as an edge angle.

With the present recording/reproducing head device, the magnetic tape 2 is run in the direction indicated by arrow A to record/reproduce the infonnation for the magnetic tape 2 by the magnetic head 1. If the magnetic tape 2 is run at an elevated velocity, an air film is produced to lower the abutting contact between the magnetic head 1 and the magnetic tape 1.

The magnetic tape 2 is introduced at a pre-set angle (wrap angle) θ₂ with respect to a plane including the sliding surface 4, as shown in Fig.4. Also, the magnetic tape 2 is introduced so that an angle θ₃ between the magnetic tape 2 and the lateral surface 5 of the magnetic tape 1 will be larger than 90°.

By introducing the magnetic tape 2 onto the magnetic head 1 as described above, the air film running with the magnetic tape 2 is effectively scraped by the edge 6. Since the air film is scraped by the edge 6, the air film can be prevented from being intruded into a space between the sliding surface 4 and the magnetic tape 2 to maintain optimum contact between the magnetic head 1 and the magnetic tape 2.

Moreover, with the present magnetic head 1, since the angle θ1 of the edge 6 is acute and less than 90°, the air film entrained by the running tape 2 is more effectively scraped offby the edge 6 than with the conventional magnetic head having a substantially right-angled tape introducing side edge, abutting contact between the magnetic head 1 and the magnetic tape may be maintained more satisfactorily.

Also, with the present magnetic head 1, the sliding surface 4 with respect to the magnetic tape 2 is substantially planar, so that the magnetic tape 2 obliquely introduced onto the sliding surface 4 onto the sliding surface 4 is flexed and raised in its position on the tape introducing side on the sliding surface 4, due to toughness of the magnetic tape 2 itself, rather than being run along the sliding surface 4, as shown in Fig.4.

At this time, a gap 7 is produced between the raised portion ofthe magnetic tape 2 and the magnetic head 1. It is noted that the majority ofthe air film, introduced onto the magnetic head 1 along with the magnetic tape 2, is scraped offby the edge 6, only a minor quantity of the air current flows onto the sliding surface 4.

The air stream, flowing onto the sliding surface 4 along with the magnetic tape 2, flows into the gap 7 defined between the magnetic tape 2 and the magnetic head 1. Since the air current flowing into the gap 7 is rapidly increased in capacity at this gap 7, the pressure of the air stream is decreased at the gap 7, thus attracting the magnetic tape 2 onto the sliding surface 4. This assures optimum abutting contact between the magnetic tape 2 and the magnetic head 1.

Moreover, the edge 6 has the function of removing not only the air film but also the foreign matter, such as dust and dirt, affixed to the magnetic tape 2. By this edge 6 removing the foreign matter attached to the magnetic tape 2, recording/reproduction can be carried out in stability without clogging of the magnetic head 1.

Since the edge 6 of the magnetic head 1 is sharp, with its angle being less than 90°, the foreign matter attached to the magnetic tape 2 can be removed more effectively than with the conventional magnetic head having the substantially rectangular cross-section, thus assuring more stable recording/reproduction.

Thus, the edge 6 plays a crucial role in assuring optimum abutting contact with respect to the magnetic tape 2 during sliding contact with the magnetic tape 2 to achieve stabilized recording/reproduction.

However, the edge 6 is worn out significantly due to sliding contact with the magnetic tape 2, because the contact pressure with the magnetic tape 2 is locally applied to the edge 6 during sliding contact of the edge 6 and the magnetic tape 2.

Fig.2 shows a schematic cross-sectional view illustrating the state in which the edge 35 is worn out due to sliding contact with the magnetic tape 21 in the conventional magnetic head 30 shown in Fig. 1. The edge 35 is worn out due to sliding contact with the magnetic tape 21 to produce a worn-out surface 36. There is produced a new edge 37 at a portion of intersection between the worn-out surface 36 and the lateral surface 34.

Referring to Fig.1, showing the state prior to wear, if an angle between the lateral surface 34 and the magnetic tape 21 is θ₉, and the wrap angle is θ₁₀, (θ₉ + θ₁₀ + 90°) = 180°, so that θ₉ = (90° - θ₁₀) < 90°, because the edge 35 has the angle of 90°.

If the angle of the edge 37, newly fonned by wear caused to the edge 35, is θ₁₁, as shown in Fig.2, (θ₉ + θ₁₁) = 180°, so that θ₁₁ = (180° - θ₉). Since θ₉ < 90°, θ₁₁ > 90°.

That is, if, with the conventional magnetic head 30 in which the edge 35 is substantially right-angled, the edge 35 is worn out by sliding contact with the magnetic tape 21, the angle θ₁₁ of the edge 37 becomes larger than 90°, such that it becomes impossible to scrape of an air film or to remove the foreign matter attached to the magnetic tape 21. If the edge 35 is worn out due to sliding contact with the magnetic tape 21, such that it becomes impossible to scrape off the air film or remove the foreign matter attached to the magnetic tape 21, the contact state between the magnetic tape 21 and the magnetic head 30 becomes inferior, while the magnetic head 30 is clogged to render the stable operation impossible.

On the other hand, in the recording/reproducing head device of the illustrated embodiment, the angle θ₁ of the edge 6 of the tape introducing side of the magnetic head 1 is set so as to be less than 90°, as shown in Fig.4. Fig.5 schematic shows the worn-out state of the edge 6 of the magnetic head 1 shown in Fig.4. The edge 6 is worn out by the sliding contact with the magnetic tape 2 to produce a worn-out surface 8. A new edge 9 is formed at the zone of intersection between the worn-out surface 8 and the lateral surface 5. If the angle of the edge 9 newly fonned by this wear of the edge 6 is denoted θ₄, θ₄ = (180° - θ₃). Since θ₃ > 90°, θ₄ < 90°.

By setting the angle θ₁ of the edge 6 to less than 90°, the angle θ₄ of the newly fonned edge 9 is less than 90°, even if the edge 6 is worn out due to sliding contact with the magnetic tape 2. Thus, if the edge 6 is worn out due to sliding contact with the magnetic tape 2, it is possible to scrape of the air film or to remove the foreign matter attached to the magnetic tape 2 by the newly fonned edge 9. Therefore, with the present magnetic head 1, if the edge 6 is worn out by the sliding contact with the magnetic tape 2, optimum contact may be maintained between the magnetic head 1 and the magnetic tape 2, while recording/reproduction may be perfonned in stability without clogging of the magnetic head 1.

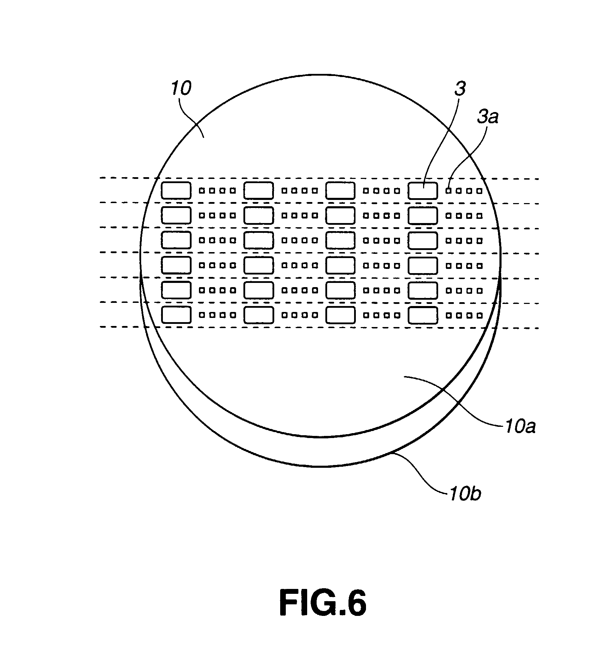

The method for producing the magnetic head 1 is hereinafter explained. For producing the magnetic head 1, plural magnetic head elements 3 are first formed on a surface 10a of a substrate 10 with a thickness eg., of approximately 3 mm, using a thin-film fonning technique, such as vapor deposition, sputtering or etching, as shown in Fig.6. It is noted that a lead-out terminal 3a from the magnetic head element 3 is fonned between the neighboring magnetic head elements 3. This substrate 10 is fonned of a high hardness material, such as Al₂O₃-TiC. The magnetic head element 3 may be a magnetic head element used in a conventional magnetic head and may be manufactured using any suitable conventional method.

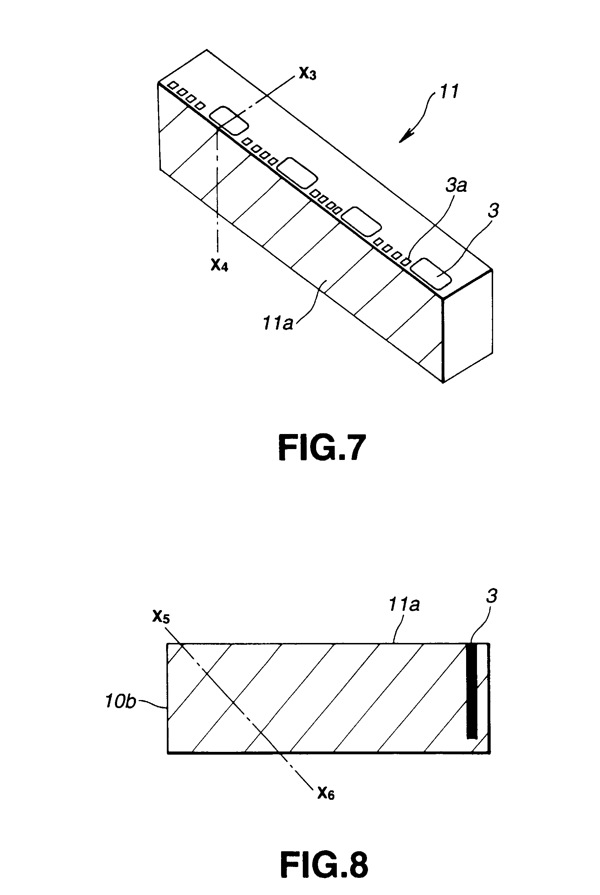

Referring to Figs.7 and 8, the substrate 10 is sliced along plural magnetic head elements 3 to provide raw-bars 11. Fig.8 shows the section taken along lines x3 - x4 in Fig.7, with a sectioned surface 11a facing upwards. Although a protective film etc for protecting the magnetic head element 3 is formed in actuality on the magnetic head element 3, such film is not shown in Figs.7 or 8 for simplicity. It is noted that the direction of thickness of the substrate 10 corresponds to the sliding direction of the magnetic head relative to the magnetic tape 2, with the sectioned surface 11a being the sliding surface 4 of the magnetic head 1.

Then, a surface 10b of the raw bar 11 opposite to its surface carrying the magnetic head element, that is the back side ofthe substrate 10, is ground along a line x5 to x6 to fabricate the magnetic head 1 such as one shown in Figs.3 and 4.

Meanwhile, in the above-described recording/reproducing head device, the magnetic tape 2 is run only in one direction for recording/reproduction. However, by employing a compound magnetic head 20, made up ofplural magnetic heads, as shown in Fig.20, it is possible to cause the magnetic tape to run in both the forward and reverse directions to effectuate the recording/reproduction.

This compound magnetic head includes a fixed member 20, a first magnetic head 22 secured to the fixed member 20, and a second magnetic head 23, similarly secured to the fixed member 20. With the present compound magnetic head, the first magnetic head 22 and the second magnetic head 23 are arranged along the sliding direction with respect to the magnetic tape 21 so that the heads 22, 23 are oriented in opposite directions.

Also, with the compound magnetic head, the first magnetic head 22 has a sliding surface 22a with the magnetic tape 21 of the first magnetic head 22 substantially flush with a sliding surface 23a of the second magnetic head 23. Although the sliding contact surface ofthe compound magnetic head and the sliding surface ofthe magnetic tape 21 may be substantially planar in its entirety, it is also possible that the exposed portion of the fixed member 20 facing the magnetic tape 21 may be receded from the sliding surfaces 22a, 23a in a direction receded from the magnetic tape 21.

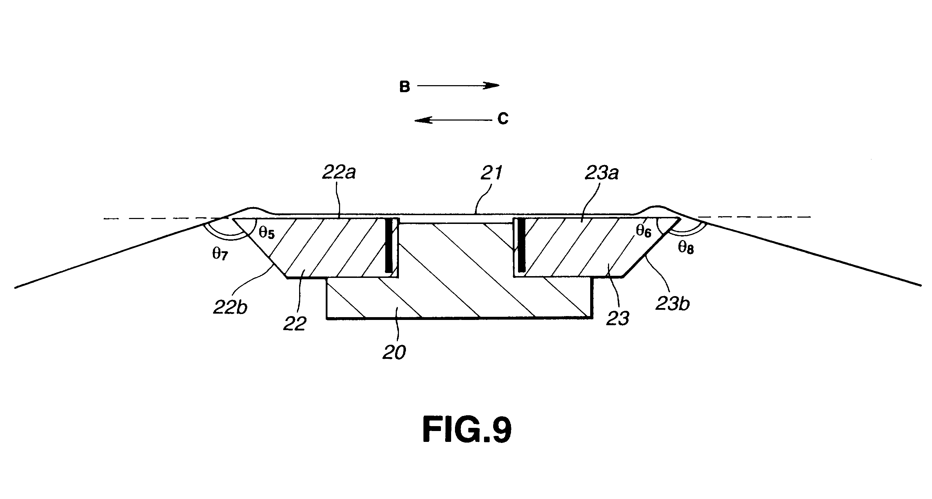

In the present recording/reproducing head device, a first magnetic head 22 is used to record the infonnation on a magnetic tape 21, whilst a second magnetic tape 23 is used to reproduce the infonnation, as the magnetic tape 21 is run in the direction indicated by arrow B in Fig.9. Also, if, in the present recording/reproducing head device, the magnetic tape 21 is run in the direction indicated by arrow C in Fig.9, the infonnation is recorded on the magnetic tape using the second magnetic tape 23, while the infonnation is reproduced from the magnetic tape 21 using the first magnetic head 22.

It is noted that the first magnetic head 22 and the second magnetic head 23 are set so that respective tape introducing side edge angles θ₅ and θ₆ are less than 90°, as shown in Fig.9. When the magnetic tape 21 is run in the direction indicated by arrow B in Fig.9, the magnetic tape 21 is introduced so as to have a pre-set angle (wrap angle) relative to the plane containing the sliding surface 22a. Moreover, the magnetic tape 21 is introduced so that an angle θ₇ between the magnetic tape 21 and the lateral surface 22b of the magnetic head 22 will be larger than 90°. Also, if the magnetic tape 21 is run in the direction indicated by arrow C in Fig.9, the magnetic tape 21 is introduced so as to have a pre-set angle (wrap angle) relative tot he plane containing the sliding surface 23a. In addition, the magnetic tape 21 is introduced so that an angle θ₈ between the magnetic tape 21 and the lateral side 23b of the magnetic head 23 will be larger than 90°.

In the present recording/reproducing head device, if the edge 22a of the first magnetic head 22 and the edge 23a of the second magnetic head 23 are worn out by the sliding of the magnetic head with the magnetic tape 21, it is possible to scrape off the air film or to remove foreign matter deposited on the magnetic tape 21 by a newly fonned edge, thus maintaining optimum contact of the first or second magnetic head 22 or 23 with the magnetic tape 21 . Moreover, recording/reproduction can be executed in stability without clogging the first or second magnetic head 22 or 23.

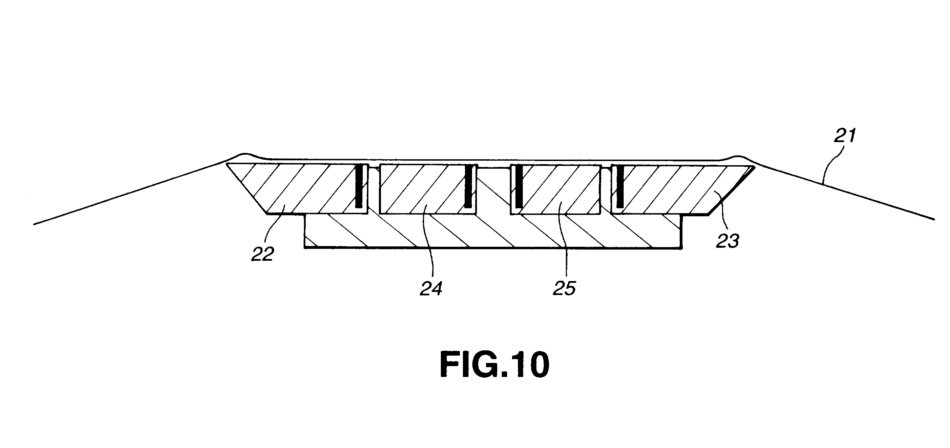

With the present recording/reproducing head device, a third magnetic head 24 and a fourth magnetic head 25 may also be arranged between the first and second magnetic heads 24, 25, as shown in Fig.10. The number of channels can be increased by arranging the third and fourth magnetic heads between the first and second magnetic heads 24, 25 in this manner. It is noted that the sliding surfaces of the third magnetic head 24 and the fourth magnetic head 25 are substantially planar.

Although the above-described embodiments are directed to a magnetic head and a magnetic recording/reproducing head device designed to record/reproduce the infonnation for a tape-shaped recording medium, the present invention is not limited to this specified configuration since the present invention may also be applied to an optical head and an optical recording/reproducing head device designed to record/reproduce the infonnation for a tape-shaped recording medium by exploiting a proximate field optical system.

## Claims

1. A head for recording and/or reproducing the infonnation for a running tape-shaped recording medium comprising:
a substantially planar recording medium facing surface facing an information recording or reproducing surface of said recording medium;
a head element arranged on said recording medium facing surface for recording and/or reproducing the infonnation for said recording medium; and
a lateral head surface positioned on the side of said recording medium facing surface onto which said recording medium is introduced, said lateral surface having an end common to the end of said recording medium facing surface and having an angle with respect to the recording medium facing surface less than 90°.

2. A recording/reproducing head device having a head for recording and/or reproducing the information for a running tape-shaped recording medium, said head comprising:
a substantially planar recording medium facing surface facing an information recording or reproducing surface of said recording medium;
a head element arranged on said recording medium facing surface for recording and/or reproducing the information for said recording medium; and
a lateral head surface positioned on a side of said recording medium facing surface onto which said recording medium is introduced, said lateral head surface having an end common to the end of said recording medium facing surface and having an angle with respect to the recording medium facing surface less than 90°.

3. The recording/reproducing head device according to claim 2 wherein said head lateral surface includes an angle larger than 90° with said recording medium intruded onto the head.

4. The recording/reproducing head device according to claim 2 wherein the recording and/or reproducing head device has a pair of said heads which are oriented in opposition to each other along the running direction of said recording medium.

5. The recording/reproducing head device according to claim 4 wherein the head lateral surface of at least one of the paired heads has an angle with respect to the recording medium introduced onto the head which is larger than 90°.
